# EUROPEAN PATENT SPECIFICATION

(11) **EP 4 102 286 B1**
(45) Date of publication and mention of the grant of the patent: **25.06.2025**
(21) Application number: 22176645.4
(22) Date of filing: 01.06.2022
(51) Int. Cl.: G02B 26/08, G02B 26/10

(54) **LIGHT SCANNING DEVICE AND IMAGE FORMING APPARATUS**
LICHTABTASTUNGSVORRICHTUNG UND BILDERZEUGUNGSVORRICHTUNG
DISPOSITIF DE BALAYAGE OPTIQUE ET APPAREIL DE FORMATION D'IMAGES

(30) Priority: 08.06.2021 JP 2021095861
(43) Date of publication of application: 14.12.2022
(73) Proprietor: FUJIFILM Corporation, Tokyo 106-8620 (JP)
(72) Inventor: TANAKA, Nobuya, Kanagawa, 258-8577 (JP); AOSHIMA, Keisuke, Kanagawa, 258-8577 (JP)
(74) Representative: HGF

(56) References cited:
- WO-A1-2013/110665
- DE-A1- 102008 043 416
- DE-A1- 102011 120 660
- DE-A1- 102016 201 439
- US-A1- 2005 190 426
- US-A1- 2013 094 003
- US-A1- 2017 052 364

## Description

### BACKGROUND OF THE INVENTION

### 1. Field of the Invention

The disclosed technology relates to a light scanning device and an image forming apparatus.

### 2. Description of the Related Art

An image forming apparatus that draws an image on a screen or the like by irradiating a mirror device configured with micro electro mechanical systems (MEMS) with light has been known. The mirror device includes a movable mirror that swings about at least one axis.

The mirror device is accommodated in a package in which a vacuum or a negative pressure is created in order to decrease air resistance of the swinging movable mirror. In this case, laser light is incident on the mirror device from an outside through a glass window provided in the package.

In a case where the mirror device is accommodated in the package, a part of the laser light incident on the glass window may be reflected on a surface of the glass window, and this reflected light may be incident on a drawing region of an image for the mirror device as stray light. In this case, in a case where the stray light is incident on the drawing region, an unnecessary bright point occurs in the image.

In S. Gu-Stoppel et al., Advanced Manufacturing, Electronics and Microsystems: TechConnect Briefs 2016, P.87-90, <https://briefs.techconnect.org/wp-content/volumes/TCB2016v4/pdf/364.pdf>, guiding the reflected light outside the drawing region by inclining the glass window is suggested because while providing an anti-reflection film on the surface of the glass window is considered in order to suppress the reflected light, it is difficult to completely suppress the reflected light with the anti-reflection film.
US 2013/094003 A1 discloses a MEMS micro-mirror including a single package; a first mirror and second mirror, wherein at least one of the mirrors is configured to oscillate along an oscillation axis.
US 2017/052364 A1 discloses an assembly body for micromirror chips that partly encloses an internal cavity, the assembly body including at least two sides oriented away from one another.
US 2005/190426 A1 discloses an optical scanning apparatus which is not limited in the disposition of a scanning device, can reduce the adherence of dust to each member of the scanning device, and is enhanced in the reliability of the scanning device.
DE 102016201439 A1 discloses a housing for receiving a vibrating device comprising housing walls by which a housing interior is at least partially enclosed and at least one window opening in at least one of the housing walls.
WO 2013/110665 A1 discloses a scanning device for scanning a two-dimensional area, the scanning device comprising a light source, a first deflection mirror and a second deflection mirror.
DE 102011120660 A1 discloses an arrangement having micro-mirrors lying next to one another and carved out from a common substrate wafer on a wafer plane. A base wafer is connected with the substrate wafer, and a partial transparent lid (3) is connected with the substrate wafer.
DE 102008043416 A1 discloses a micromechanical component with a light window; a mirror element, which is adjustable relative to the light window from a first position about at least one axis of rotation in at least one second position; and an optical sensor having a detection surface which is designed to determine a light intensity on the detection surface and to provide a corresponding sensor signal.

### SUMMARY OF THE INVENTION

However, in a case where the glass window is inclined as disclosed in S. Gu-Stoppel et al., Advanced Manufacturing, Electronics and Microsystems: TechConnect Briefs 2016, P.87-90, <https://briefs.techconnect.org/wp-content/volumes/TCB2016v4/pdf/364.pdf>, a problem arises in that a package size is increased because a thickness of the package is increased. In addition, a problem arises in that a manufacturing cost is increased because of the increase in package size.

An object of the disclosed technology is to provide a light scanning device and an image forming apparatus that can be provided in a small size at a decreased manufacturing cost without causing stray light to be incident on a drawing region.

In order to accomplish the above object, a light scanning device according to claim 1 is provided. Advantageous embodiments are defined in the dependent claims. A light scanning device according to an aspect of the present disclosure is a light scanning device comprising a mirror device that includes a movable mirror which swings about at least one axis, and a package that has at least two or more light transmission surfaces not constituting the same plane and accommodates the mirror device, in which out of the two or more light transmission surfaces of the package, one light transmission surface is a light receiving surface for receiving an incidence ray on the movable mirror from an outside, and the other light transmission surface is a light extraction surface for extracting light reflected by the movable mirror to the outside.

It is preferable that a vacuum or a negative pressure is created inside the package.

It is preferable that a signal input terminal for receiving a driving signal for driving the movable mirror from the outside is provided in the package.

It is preferable that an optical element that guides light incident from the light receiving surface to the movable mirror by deflecting the light is provided inside the package.

The light receiving surface and the light extraction surface are configured with two light transmission surfaces that are not parallel.

An imaging apparatus and a signal output terminal for extracting an imaging signal output from the imaging apparatus to the outside are provided inside the package, and the light extraction surface guides a part of the light reflected by the movable mirror to the imaging apparatus by reflecting the part of the light.

An image forming apparatus according to another aspect of the present disclosure is an image forming apparatus comprising a light scanning device including a mirror device that includes a movable mirror which swings about at least one axis, and a package that has at least two or more light transmission surfaces not constituting the same plane and accommodates the mirror device, and a light emitting device that emits light, in which out of the two or more light transmission surfaces of the package, one light transmission surface is a light receiving surface for receiving an incidence ray on the movable mirror from an outside, and the other light transmission surface is a light extraction surface for extracting light reflected by the movable mirror to the outside, and the light emitted from the light emitting device is incident on the movable mirror through the light receiving surface.

According to the disclosed technology, a light scanning device and an image forming apparatus that can be provided in a small size at a decreased manufacturing cost without causing stray light to be incident on a drawing region can be provided.

### BRIEF DESCRIPTION OF THE DRAWINGS

Fig. 1 is a schematic diagram illustrating an example of a configuration of an image forming apparatus.
Fig. 2 is a schematic perspective view illustrating an example of a configuration of a MEMS mirror.
Fig. 3 is a schematic perspective view illustrating an example of an exterior configuration of a light scanning device.
Fig. 4 is a schematic cross-sectional view illustrating an example of a cross-sectional structure of the light scanning device.
Fig. 5 is a schematic cross-sectional view illustrating an example of a cross-sectional structure of a light scanning device according to a second embodiment.
Fig. 6 is a schematic cross-sectional view illustrating an example of a cross-sectional structure of a light scanning device according to a third embodiment.
Fig. 7 is a block diagram illustrating an example of a functional configuration of a control device.
Fig. 8 is a diagram illustrating an example of a first driving signal, a first zero cross signal, and a first reference signal.
Fig. 9 is a diagram illustrating an example of a second driving signal, a second zero cross signal, and a second reference signal.
Fig. 10 is a diagram illustrating an example of a pattern drawn on a projection surface in a calibration mode.
Fig. 11 is a diagram illustrating an example of the pattern drawn on the projection surface in a case where a shift occurs between a swing of a mirror portion and timings of the first reference signal and the second reference signal.
Fig. 12 is a diagram illustrating an example of a functional configuration of a correction portion.
Figs. 13A and 13B are diagrams illustrating an example of timing correction performed by a signal correction portion: Fig. 13A illustrates an example of correcting the timing of the first reference signal, and Fig. 13B illustrates an example of correcting the timing of the second reference signal.

### DESCRIPTION OF THE PREFERRED EMBODIMENTS

Hereinafter, embodiments according to the disclosed technology will be described in detail with reference to the drawings. As an example, in each of the following embodiments, a form of applying the disclosed technology to an image forming apparatus that forms an image on a projection surface by scanning laser light using a Lissajous method will be described.

### First Embodiment

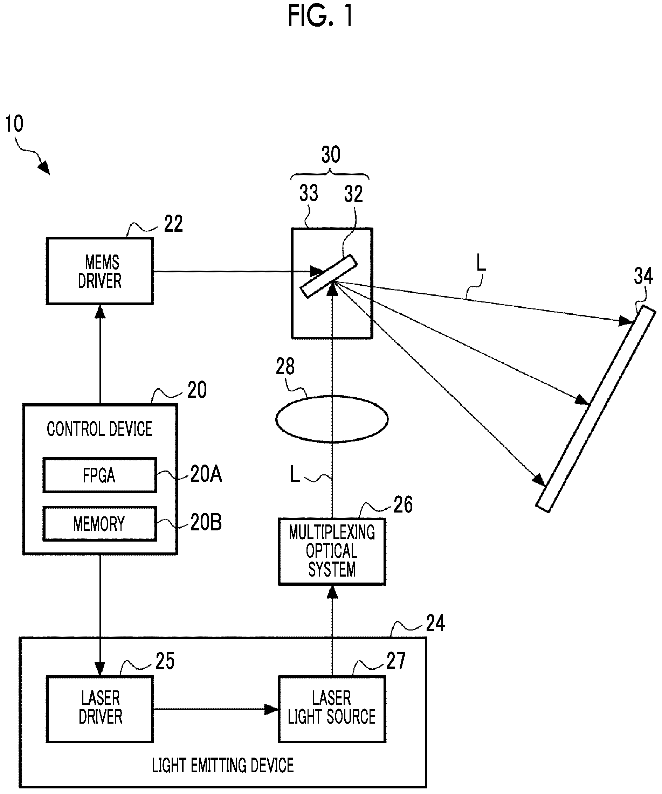

Fig. 1 illustrates an example of a configuration of an image forming apparatus 10 of the present embodiment which is an embodiment not according to the claimed subject-matter, but useful for understanding the invention. As illustrated in Fig. 1, the image forming apparatus 10 of the present embodiment comprises a control device 20, a MEMS driver 22, a light emitting device 24, a multiplexing optical system 26, a collimator 28, and a light scanning device 30. The light scanning device 30 is configured with a MEMS mirror 32 and a package 33 that accommodates the MEMS mirror 32. The MEMS mirror 32 is an example of a "mirror device" according to the embodiment of the disclosed technology.

The light emitting device 24 includes a laser driver 25 and a laser light source 27. The laser driver 25 of the present embodiment drives the laser light source 27 based on an intensity modulation signal supplied from the control device 20 and causes laser light for forming an image to be output from the laser light source 27. For example, the laser light source 27 outputs the laser light of three colors of red (R), green (G), and blue (B). The laser light is an example of "light" according to the embodiment of the disclosed technology.

The laser light output from the laser light source 27 is multiplexed by the multiplexing optical system 26. Then, the MEMS mirror 32 in the package 33 is irradiated with the multiplexed laser light through the collimator 28. The laser light condensed in the MEMS mirror 32 is reflected toward a projection surface 34 by the MEMS mirror 32. For example, the projection surface 34 is a screen for projecting the image, or a retina of an eye of a person. That is, the image forming apparatus 10 of the present embodiment is used for a projector, augmented reality (AR) glasses, and the like.

In the present embodiment, the projection surface 34 is not limited to a surface of an actual object such as the screen and includes an imaginary plane in a space.

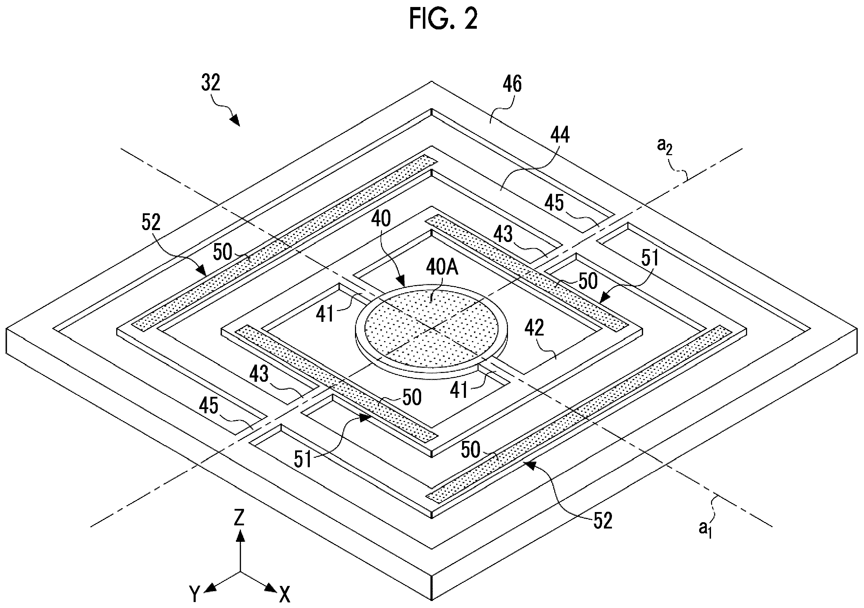

The MEMS driver 22 drives the MEMS mirror 32 under control of the control device 20. In the MEMS mirror 32, a mirror portion 40 (refer to Fig. 2) that reflects laser light L swings about each of two axes orthogonal to each other as a central axis. In the present embodiment, the laser light L is scanned in a state of drawing a Lissajous curve on the projection surface 34 by the swing of the mirror portion 40 based on a driving signal. The Lissajous curve is a curve that is decided by a swing frequency about a first axis, a swing frequency about a second axis, and a phase difference therebetween. The mirror portion 40 is an example of a "movable mirror" according to the embodiment of the disclosed technology.

The control device 20 of the present embodiment includes a field programmable gate array (FPGA) 20A and a memory 20B. For example, the memory 20B is a volatile memory and stores various information such as an image signal representing the image projected to the projection surface 34. For example, the memory 20B stores the image signal input from an outside of the image forming apparatus 10.

Fig. 2 illustrates an example of a configuration of the MEMS mirror 32. The MEMS mirror 32 includes the mirror portion 40, a first support portion 41, a first movable frame 42, a second support portion 43, a second movable frame 44, a connecting portion 45, and a fixed frame 46.

The mirror portion 40 has a reflecting surface 40A on which an incidence ray is reflected. For example, the reflecting surface 40A is formed with a thin metal film of gold (Au), aluminum (Al), silver (Ag), or a silver alloy. For example, a shape of the reflecting surface 40A is a circular shape.

The first support portion 41 is arranged outside the mirror portion 40 at each of positions that face with a second axis a₂ interposed therebetween. The first support portions 41 are connected to the mirror portion 40 on a first axis a₁ and support the mirror portion 40 in a swingable manner about the first axis a₁.

The first movable frame 42 is a rectangular frame surrounding the mirror portion 40 and is connected to the mirror portion 40 through the first support portions 41 on the first axis a₁. A piezoelectric element 50 is formed on the first movable frame 42 at each of positions that face with the first axis a₁ interposed therebetween. In such a manner, a pair of first actuators 51 are configured by forming two piezoelectric elements 50 on the first movable frame 42.

The pair of first actuators 51 are arranged at positions that face with the first axis a₁ interposed therebetween. The first actuators 51 cause the mirror portion 40 to swing about the first axis a₁ by applying rotational torque about the first axis a₁ to the mirror portion 40.

The second support portion 43 is arranged outside the first movable frame 42 at each of positions that face with the first axis a₁ interposed therebetween. The second support portions 43 are connected to the first movable frame 42 on the second axis a₂ and support the first movable frame 42 and the mirror portion 40 in a swingable manner about the second axis a₂. In the present embodiment, the second support portions 43 are torsion bars that stretch along the second axis a₂.

The second movable frame 44 is a rectangular frame surrounding the first movable frame 42 and is connected to the first movable frame 42 through the second support portions 43 on the second axis a₂. The piezoelectric element 50 is formed on the second movable frame 44 at each of positions that face with the second axis a₂ interposed therebetween. In such a manner, a pair of second actuators 52 are configured by forming two piezoelectric elements 50 on the second movable frame 44.

The pair of second actuators 52 are arranged at positions that face with the second axis a₂ interposed therebetween. The second actuators 52 cause the mirror portion 40 to swing about the second axis a₂ by applying rotational torque about the second axis a₂ to the mirror portion 40 and the first movable frame 42.

The connecting portion 45 is arranged outside the second movable frame 44 at each of positions that face with the first axis a₁ interposed therebetween. The connecting portions 45 are connected to the second movable frame 44 on the second axis a₂.

The fixed frame 46 is a rectangular frame surrounding the second movable frame 44 and is connected to the second movable frame 44 through the connecting portions 45 on the second axis a₂.

In the present embodiment, the first axis a₁ and the second axis a₂ are orthogonal to each other. In the following description, a direction parallel to the first axis a₁ will be referred to as an X direction, a direction parallel to the second axis a₂ will be referred to as a Y direction, and a direction orthogonal to the first axis a₁ and the second axis a₂ will be referred to as a Z direction.

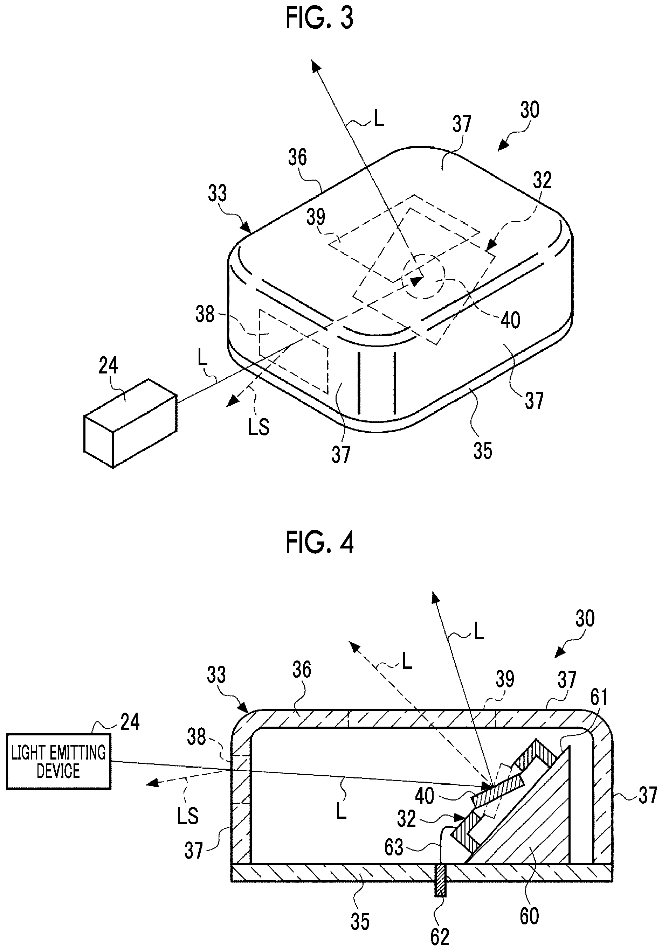

Fig. 3 illustrates an example of an exterior configuration of the light scanning device 30. The package 33 has an almost rectangular parallelepiped shape. For example, the package 33 is configured with a substrate 35 having a flat plate shape and a lid member 36 having a box shape. For example, the substrate 35 and the lid member 36 are formed of glass having light transmittance. The package 33 is configured by joining the lid member 36 to the substrate 35. The MEMS mirror 32 is accommodated inside the package 33.

In addition, a vacuum or a negative pressure is created inside the package 33. In such a manner, by creating a vacuum or a negative pressure inside the package 33, an energy loss at a time of the swing of the mirror portion 40 is reduced, and a large deflection angle can be implemented with a low driving voltage. The negative pressure means that a pressure inside the package 33 is lower than a pressure (that is, atmospheric pressure) outside the package 33.

The lid member 36 has four light transmission surfaces 37. The four light transmission surfaces 37 are configured with one upper surface and three side surfaces. In the present embodiment, the light transmission surface 37 as one side surface among the four light transmission surfaces 37 functions as a "light receiving surface" for receiving the incidence ray on the mirror portion 40 from the outside. In addition, the light transmission surface 37 as one upper surface among the four light transmission surfaces 37 functions as a "light extraction surface" for extracting the light reflected by the mirror portion 40 to the outside. That is, in the present embodiment, the light receiving surface and the light extraction surface are configured with two light transmission surfaces 37 that are not parallel.

The laser light L emitted from the light emitting device 24 is transmitted through a light receiving region 38 on the light receiving surface and is incident into the package 33. The laser light L incident into the package 33 is incident on the mirror portion 40 of the MEMS mirror 32. The laser light L reflected by the mirror portion 40 is transmitted through a light extraction region 39 on the light extraction surface and is extracted outside the package 33. The laser light L transmitted through the light extraction region 39 is incident on the projection surface 34 (refer to Fig. 1).

Fig. 4 illustrates an example of a cross-sectional structure of the light scanning device 30. As illustrated in Fig. 4, the MEMS mirror 32 is fixed to the substrate 35 through a support member 60. For example, the support member 60 has a triangular prism shape and has an inclined surface 61. The MEMS mirror 32 is joined to the inclined surface 61. That is, a surface of the mirror portion 40 is not parallel to any of the light receiving surface and the light extraction surface in a standstill state.

A signal input terminal 62 for receiving a driving signal for driving the mirror portion 40 from the outside is provided in the substrate 35. For example, the signal input terminal 62 is electrically connected to the MEMS mirror 32 through a bonding wire 63. The MEMS driver 22 (refer to Fig. 1) inputs the driving signal into the MEMS mirror 32 through the signal input terminal 62. For example, the signal input terminal 62 is individually provided in each of the pair of first actuators 51 and the pair of second actuators 52. Driving signals having different frequencies are provided to the pair of first actuators 51 and the pair of second actuators 52.

As illustrated in Fig. 3 and Fig. 4, the laser light L emitted from the light emitting device 24 is partially reflected on the light receiving surface and becomes stray light LS. Since the light extraction surface is configured with the light transmission surface 37 that does not constitute the same plane with the light transmission surface 37 constituting the light receiving surface, the stray light LS is not incident on a drawing region (that is, the projection surface 34).

In the light scanning device 30 of the present embodiment, inclining a glass window in order to guide the stray light LS outside the drawing region as in the related art is not necessary. Thus, a thickness of the package 33 is not increased, and a package size can be decreased. Thus, according to the disclosed technology, the light scanning device 30 that can be provided in a small size at a decreased manufacturing cost without causing the stray light to be incident on the drawing region is implemented.

In the embodiment, while the entire package 33 is formed of a light transmission material such as glass, the package 33 may be partially formed of a light shielding member. For example, a part other than the light receiving region 38 and the light extraction region 39 in the package 33 may be formed of a light shielding member.

### Second Embodiment

Next, a second embodiment which is an embodiment not according to the claimed subject-matter, but useful for understanding the invention will be described. While the laser light is received into the package 33 from one side surface of the lid member 36 in the first embodiment, the laser light is received into the package 33 from the substrate 35 in the second embodiment.

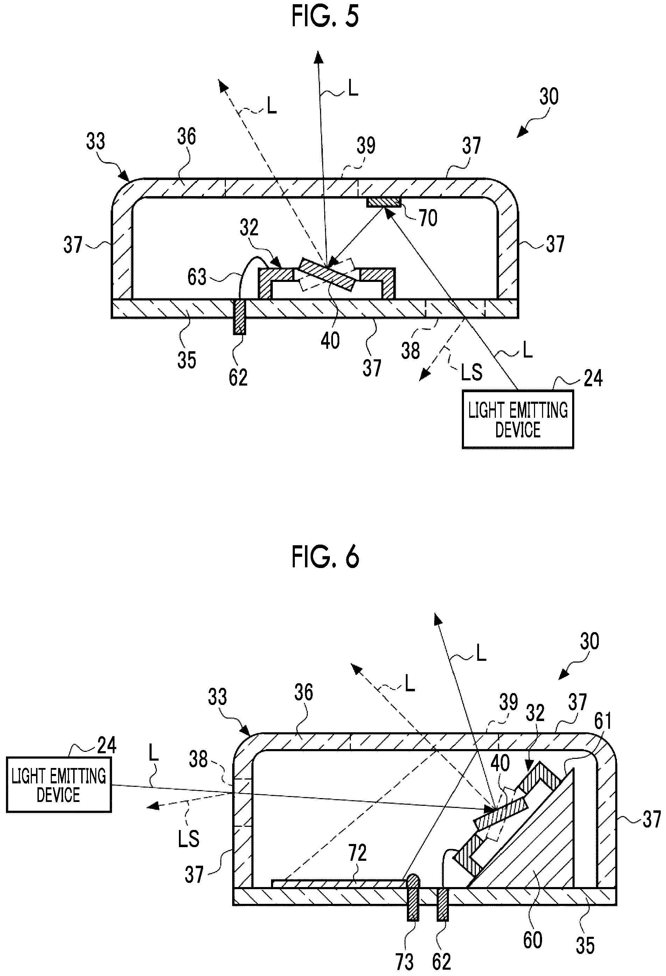

Fig. 5 illustrates an example of a cross-sectional structure of the light scanning device 30 according to the second embodiment. The substrate 35 transmits light, and a surface of the substrate 35 is the light transmission surface 37. In the embodiment, the light transmission surface 37 of the substrate 35 functions as the "light receiving surface" for receiving the incidence ray on the mirror portion 40 from the outside. The laser light L emitted from the light emitting device 24 is transmitted through the light receiving region 38 of the substrate 35 and is incident into the package 33. The laser light L incident into the package 33 is incident on an inner surface side of the lid member 36.

An optical element 70 is provided on the inner surface side of the lid member 36 at a position on which the laser light L is incident. The optical element 70 guides the laser light L incident from the light receiving region 38 to the mirror portion 40 of the MEMS mirror 32 by deflecting the laser light L. In the present embodiment, the optical element 70 is a reflecting film formed by sputtering or a vapor deposition method. The optical element 70 deflects the laser light L by specular reflection so that the laser light L is guided to the mirror portion 40.

In the present embodiment, the MEMS mirror 32 is directly fixed to the substrate 35 without using the support member 60 (refer to Fig. 4). That is, in the present embodiment, the MEMS mirror 32 is not inclined with respect to the substrate 35. The laser light L reflected by the mirror portion 40 is transmitted through the light extraction region 39 on the upper surface of the lid member 36 and is extracted outside the package 33 in the same manner as in the above embodiment.

As described above, in the second embodiment, the laser light L is received from a rear surface side of the package 33. Thus, the stray light LS caused by partial reflection of the laser light L on the light receiving surface is not incident on the drawing region. Accordingly, even in the second embodiment, since inclining the glass window in order to guide the stray light LS outside the drawing region as in the related art is not necessary, the light scanning device 30 that can be provided in a small size at a decreased manufacturing cost is implemented. In addition, since it is not necessary to incline the MEMS mirror 32 with respect to the substrate 35, the thickness of the package 33 can be further decreased.

The optical element 70 is not limited to a reflecting film and may be an optical element such as a grating or a hologram. A grating or a hologram can emit the laser light L at an emission angle different from an incidence angle. Thus, using an optical element such as a grating or a hologram as the optical element 70 improves a degree of design freedom of a position and the like for arranging the optical element 70.

### Third Embodiment

Next, a third embodiment which is an embodiment according to the claimed subject-matter will be described. In the third embodiment, an imaging apparatus is provided inside the package 33. The imaging apparatus is used for correcting a light emission timing of the laser light L by the light emitting device 24.

Fig. 6 illustrates an example of a cross-sectional structure of the light scanning device 30 according to the third embodiment. In the present embodiment, an imaging apparatus 72 is attached to the substrate 35 inside the package 33. The imaging apparatus 72 is provided on an optical path of the laser light L reflected on the light extraction region 39 out of the laser light L reflected by the mirror portion 40. A signal output terminal 73 for extracting an imaging signal output from the imaging apparatus 72 to the outside is provided in the substrate 35. Other configurations of the light scanning device 30 according to the present embodiment are the same as the configurations of the light scanning device 30 according to the first embodiment.

The imaging apparatus 72 generates a captured image IP by imaging the laser light L reflected on the light extraction region 39 and outputs the generated captured image IP to the control device 20 (refer to Fig. 1). The imaging apparatus 72 is configured with an image sensor such as a charge coupled device (CCD) image sensor or a complementary metal oxide semiconductor (CMOS) image sensor. In addition, the imaging apparatus 72 may be configured with a position sensitive detector (PSD). The captured image IP is used for correcting timings of a first reference signal and a second reference signal, described later. The captured image IP is an example of "imaging information" according to the embodiment of the disclosed technology.

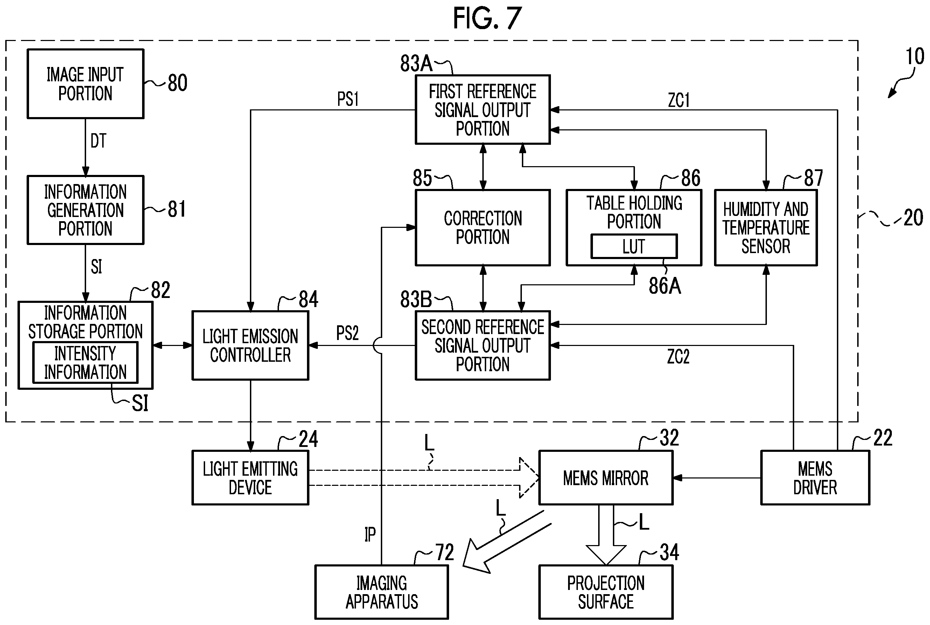

Fig. 7 illustrates an example of a functional configuration of the control device 20. As illustrated in Fig. 7, the control device 20 is configured with an image input portion 80, an information generation portion 81, an information storage portion 82, a first reference signal output portion 83A, a second reference signal output portion 83B, a light emission controller 84, a correction portion 85, a table holding portion 86, and a humidity and temperature sensor 87. The image input portion 80, the information generation portion 81, the information storage portion 82, the first reference signal output portion 83A, the second reference signal output portion 83B, the light emission controller 84, the correction portion 85, and the table holding portion 86 are functional portions implemented by causing the FPGA 20A and the memory 20B to operate in cooperation.

Image data DT that represents the image to be formed is input into the image input portion 80 from the outside. Hereinafter, the image corresponding to the image data DT input into the image input portion 80 may be referred to as an input image. As an example, in the present embodiment, the image data DT of colors represented by RGB signals is input into the image input portion 80. The image data DT input into the image input portion 80 is output to the information generation portion 81. The image data DT input into the image input portion 80 is not limited to the present embodiment and may be data corresponding to the image to be formed. For example, the image data DT may be binarized data that represents whether or not to output the laser light L. In addition, for example, the image data DT may be data that represents multiple values of an output amount.

The information generation portion 81 generates intensity information SI that represents a correspondence relationship between a scanning position of the laser light L by the MEMS mirror 32 and a signal intensity of the input image. In a case where the input image is a color image, the signal intensity represents an intensity of each of the RGB signals. The information storage portion 82 stores the intensity information SI generated by the information generation portion 81.

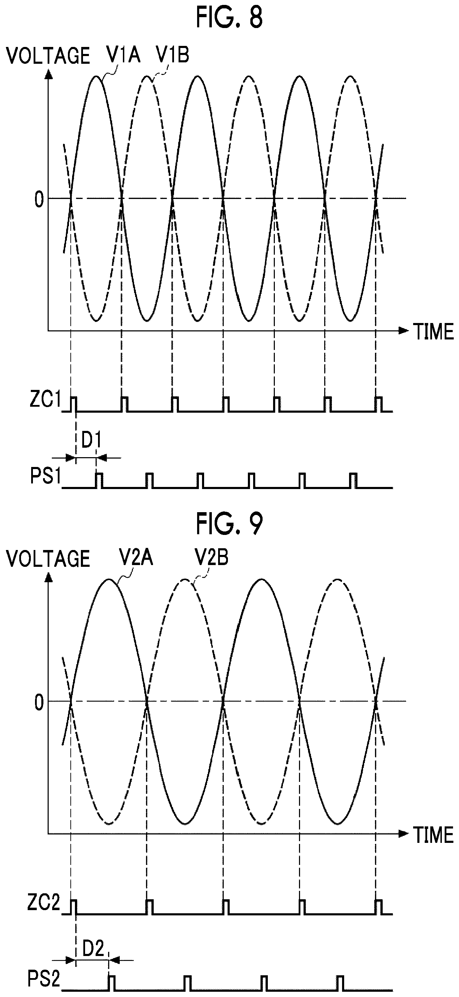

The MEMS driver 22 outputs first driving signals V1A and V1B illustrated in Fig. 8 as an example to the pair of first actuators 51 of the MEMS mirror 32, and generates a first zero cross signal ZC1 and outputs the first zero cross signal ZC1 to the first reference signal output portion 83A. The first driving signal V1A and the first driving signal V1B are sine waves having a phase difference of 180°.

The first zero cross signal ZC1 is a pulsed signal that represents points at which the first driving signals V1A and V1B become zero. Signals output to the first reference signal output portion 83A from the MEMS driver 22 are not limited to zero cross signals and may be signals having the same periods as the first driving signals V1A and V1B.

The MEMS driver 22 outputs second driving signals V2A and V2B illustrated in Fig. 9 as an example to the pair of second actuators 52 of the MEMS mirror 32, and generates a second zero cross signal ZC2 and outputs the second zero cross signal ZC2 to the second reference signal output portion 83B. The second driving signal V2A and the second driving signal V2B are sine waves having a phase difference of 180°.

The second zero cross signal ZC2 is a pulsed signal that represents points at which the second driving signals V2A and V2B become zero. Signals output to the second reference signal output portion 83B from the MEMS driver 22 are not limited to zero cross signals and may be signals having the same periods as the second driving signals V2A and V2B.

A frequency (hereinafter, referred to as a first driving frequency) of the first driving signals V1A and V1B and a frequency (hereinafter, referred to as a second driving frequency) of the second driving signals V2A and V2B have different frequency ratios. A frequency ratio of the first driving frequency and the second driving frequency is decided based on a shape of a Lissajous curve of light scanning performed by the MEMS mirror 32.

The first reference signal output portion 83A outputs a first reference signal PS1 to the light emission controller 84 by estimating a point in time when a deflection angle (hereinafter, referred to as a first deflection angle) θ1 of the mirror portion 40 about the first axis a₁ becomes equal to a first reference angle. In the present embodiment, the first reference angle is set to 0°. The first reference signal output portion 83A generates the first reference signal PS1 by estimating the point in time when the first deflection angle θ1 becomes equal to the first reference angle, based on the first driving signals V1A and V1B.

Specifically, as illustrated in Fig. 8, the first reference signal output portion 83A outputs a signal obtained by delaying the first zero cross signal ZC1 input from the MEMS driver 22 by a delay time period D1 as the first reference signal PS1. In a case where the mirror portion 40 resonates about the first axis a₁, the delay time period D1 is ideally a time period corresponding to 1/4 of a period of the first zero cross signal ZC1. However, a shift occurs due to an environmental condition (a temperature, a humidity, and the like). Thus, in the present embodiment, the first reference signal output portion 83A acquires the delay time period D1 based on a temperature and a humidity detected by the humidity and temperature sensor 87 and a look-up table (hereinafter, referred to as the LUT) 86A held in the table holding portion 86, and generates the first reference signal PS1 based on the acquired delay time period D1.

The second reference signal output portion 83B outputs a second reference signal PS2 to the light emission controller 84 by estimating a point in time when a deflection angle (hereinafter, referred to as a second deflection angle) θ2 of the mirror portion 40 about the second axis a₂ becomes equal to a second reference angle. In the present embodiment, the second reference angle is set to 0°. The second reference signal output portion 83B generates the second reference signal PS2 by estimating the point in time when the second deflection angle θ2 becomes equal to the second reference angle, based on the second driving signals V2A and V2B.

Specifically, as illustrated in Fig. 9, the second reference signal output portion 83B outputs a signal obtained by delaying the second zero cross signal ZC2 input from the MEMS driver 22 by a delay time period D2 as the second reference signal PS2. In a case where the mirror portion 40 resonates about the second axis a₂, the delay time period D2 is ideally a time period corresponding to 1/4 of a period of the second zero cross signal ZC2. However, a shift occurs due to an environmental condition (a temperature, a humidity, and the like). Thus, in the present embodiment, the second reference signal output portion 83B acquires the delay time period D2 based on the temperature and the humidity detected by the humidity and temperature sensor 87 and the LUT 86A held in the table holding portion 86, and generates the second reference signal PS2 based on the acquired delay time period D2.

A relationship among the delay time period D1, the temperature, and the humidity and a relationship among the delay time period D2, the temperature, and the humidity are recorded in advance in the LUT 86A. For example, these relationships are decided based on a past history.

The light emission controller 84 causes the light emitting device 24 to emit the laser light L based on the first reference signal PS1 and the second reference signal PS2. In a drawing mode in which the image based on the image data DT is drawn on the projection surface 34, the light emission controller 84 reads out the intensity information SI from the information storage portion 82 and causes the light emitting device 24 to emit the laser light L having an intensity decided based on the first reference signal PS1 and the second reference signal PS2 for each constant time period (for example, for each clock period).

In addition, in the present embodiment, a calibration mode for correcting the timings of the first reference signal PS1 and the second reference signal PS2 output by the first reference signal output portion 83A and the second reference signal output portion 83B, respectively, is performed. In the calibration mode, the light emission controller 84 causes the light emitting device 24 to emit the laser light L in accordance with the timing at which the first reference signal PS1 is output from the first reference signal output portion 83A, and the timing at which the second reference signal PS2 is output from the second reference signal output portion 83B. That is, in the calibration mode, the light emission controller 84 causes the light emitting device 24 to emit the laser light L at the point in time when the first deflection angle θ1 is estimated to become equal to the first reference angle (in the present embodiment, 0°), and the point in time when the second deflection angle θ2 is estimated to become equal to the second reference angle (in the present embodiment, 0°).

In the calibration mode, the imaging apparatus 72 images the laser light L reflected on the light extraction region 39 out of the laser light L that is emitted from the light emitting device 24 and is reflected by the mirror portion 40. The imaging apparatus 72 outputs the captured image IP generated by the imaging to the correction portion 85. A pattern drawn on the projection surface 34 is imaged in the captured image IP.

The correction portion 85 corrects the timings of the first reference signal PS1 and the second reference signal PS2 output by the first reference signal output portion 83A and the second reference signal output portion 83B, respectively, based on a shift amount of the pattern captured in the captured image IP from a predetermined shape.

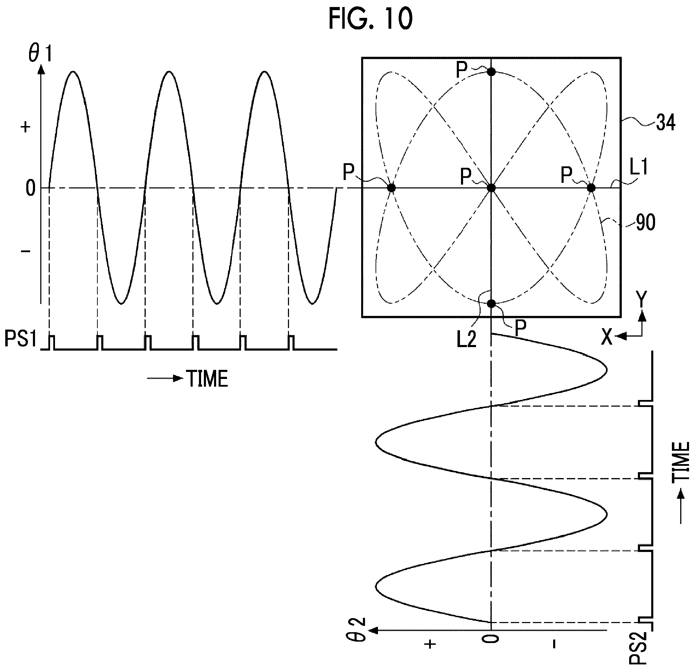

Fig. 10 illustrates an example of the pattern drawn on the projection surface 34 in the calibration mode. In the present example, the frequency ratio of the first driving frequency and the second driving frequency is set to 3:2 for simplification of description. In the present example, a Lissajous curve 90 is drawn on the projection surface 34 by the light scanning performed by the MEMS mirror 32.

Fig. 10 illustrates a case where a shift does not occur between the swing of the mirror portion 40 and the timings of the first reference signal PS1 and the second reference signal PS2. In such a manner, in a case where a shift does not occur, the light emitting device 24 emits the laser light L at the point in time of θ1 = 0 and the point in time of θ2 = 0. Thus, a first reference line L1 and a second reference line L2 on the projection surface 34 are irradiated with the laser light L. The first reference line L1 is a straight line that passes through a center of the Lissajous curve 90 and is parallel to the X direction. The second reference line L2 is a straight line that passes through the center of the Lissajous curve 90 and is parallel to the Y direction. Reference numeral P denotes a point (that is, a bright point) irradiated with the laser light L on the projection surface 34.

In a case where the frequency ratio of the first driving frequency and the second driving frequency is set to make the Lissajous curve 90 more precise, the bright points P draw straight line patterns along the first reference line L1 and the second reference line L2.

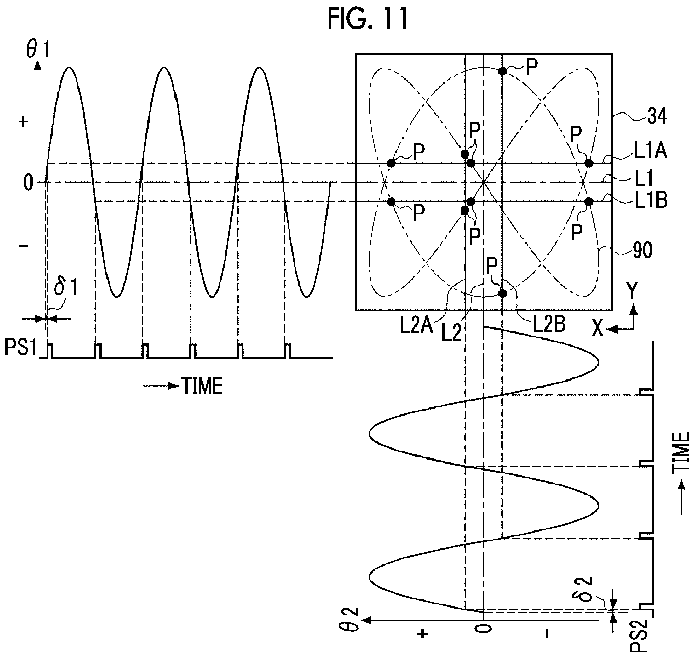

Fig. 11 illustrates a case where a shift occurs between the swing of the mirror portion 40 and the timings of the first reference signal PS1 and the second reference signal PS2. In such a manner, in a case where a shift occurs, the light emitting device 24 emits the laser light L at points in time shifted from the point in time of θ1 = 0 and the point in time of θ2 = 0. Thus, positions shifted from the first reference line L1 and the second reference line L2 on the projection surface 34 are irradiated with the laser light L. In the present example, straight lines L1A and L1B shifted from the first reference line L1 and straight lines L2A and L2B shifted from the second reference line L2 are irradiated with the laser light L.

The straight line L1A is a line that is irradiated with the laser light L on an advancing path of Lissajous scanning. The straight line L1B is a line that is irradiated with the laser light L on a returning path of the Lissajous scanning. In addition, the straight line L2A is a line that is irradiated with the laser light L on the advancing path of the Lissajous scanning. The straight line L2B is a line that is irradiated with the laser light L on the returning path of the Lissajous scanning. The advancing path refers to a path along which the first deflection angle θ1 is increased for the Y direction, and a path along which the second deflection angle θ2 is increased for the X direction. The returning path refers to a path along which the first deflection angle θ1 is decreased for the Y direction, and a path along which the second deflection angle θ2 is decreased for the X direction.

In such a manner, in a case where a shift occurs between the swing of the mirror portion 40 and the timings of the first reference signal PS1 and the second reference signal PS2, the first reference line L1 is separated into the straight line L1A and the straight line L1B, and the second reference line L2 is separated into the straight line L2A and the straight line L2B.

In a case where the frequency ratio of the first driving frequency and the second driving frequency is set to make the Lissajous curve 90 more precise, the bright points P draw straight line patterns along the straight line L1A, the straight line L1B, the straight line L2A, and the straight line L2B.

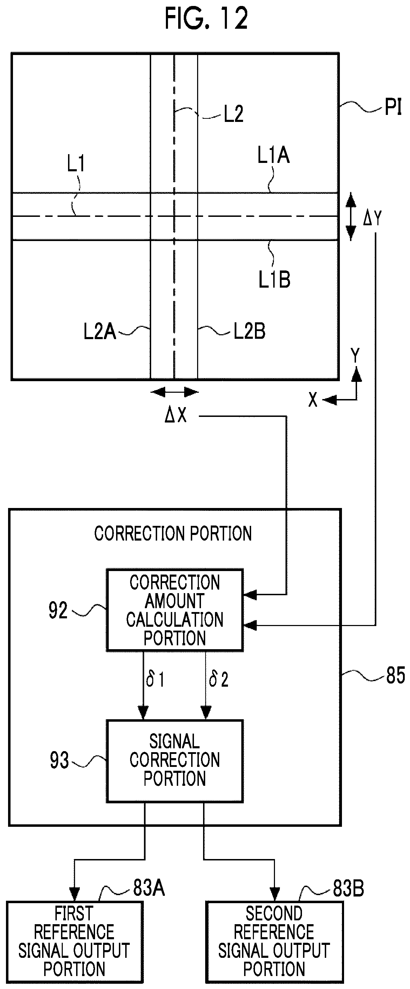

Fig. 12 illustrates an example of a functional configuration of the correction portion 85. The correction portion 85 includes a correction amount calculation portion 92 and a signal correction portion 93. The captured image IP is input into the correction portion 85 from the imaging apparatus 72.

The correction amount calculation portion 92 derives a shift amount ΔY between the straight line L1A and the straight line L1B in the Y direction and a shift amount ΔX between the straight line L2A and the straight line L2B in the X direction based on the captured image IP. In addition, the correction amount calculation portion 92 derives a correction amount δ1 of the timing of the first reference signal PS1 for ΔX = 0 and a correction amount δ2 of the timing of the second reference signal PS2 for ΔY = 0 and outputs the derived correction amounts δ1 and δ2 to the signal correction portion 93. For example, the correction amount calculation portion 92 derives the correction amounts δ1 and δ2 based on a relationship between the shift amount ΔX and the correction amount δ1 and a relationship between the shift amount ΔY and the correction amount δ2 stored in advance. Each of the relationship between the shift amount ΔX and the correction amount δ1 and the relationship between the shift amount ΔY and the correction amount δ2 is an almost proportional relationship.

The correction amount calculation portion 92 derives the shift amounts ΔX and ΔY based on the captured image IP obtained in a state where the timings of the first reference signal PS1 and the second reference signal PS2 are not corrected (that is, a state of δ1 = 0 and δ2 = 0), and derives the correction amounts δ1 and δ2 based on the derived shift amounts ΔX and ΔY.

The signal correction portion 93 corrects the timing of the first reference signal PS1 output from the first reference signal output portion 83A based on the correction amount δ1 input from the correction amount calculation portion 92, and corrects the timing of the second reference signal PS2 output from the second reference signal output portion 83B based on the correction amount δ2 input from the correction amount calculation portion 92.

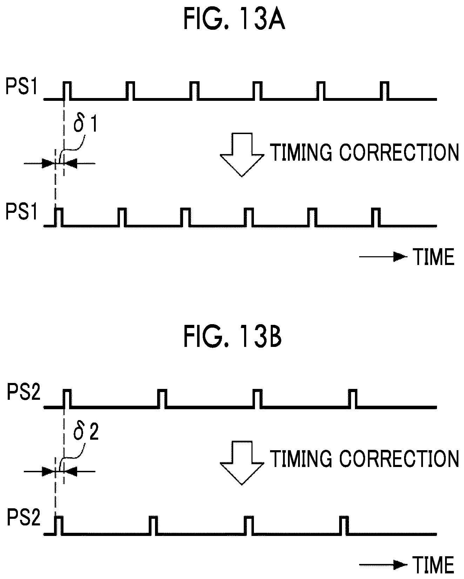

Figs. 13A and 13B illustrate an example of timing correction performed by the signal correction portion 93. Fig. 13A illustrates an example of correcting the timing of the first reference signal PS1 based on the correction amount δ1. Fig. 13B illustrates an example of correcting the timing of the second reference signal PS2 based on the correction amount δ2. Correcting the timings of the first reference signal PS1 and the second reference signal PS2 results in ΔX = 0 and ΔY = 0. Accordingly, the straight line L1A matches the straight line L1B, and the straight line L2A matches the straight line L2B.

The signal correction portion 93 may be provided inside each of the first reference signal output portion 83A and the second reference signal output portion 83B. In this case, the first reference signal output portion 83A corrects the timing of the first reference signal PS1 based on the correction amount δ1 input from the correction amount calculation portion 92. Similarly, the second reference signal output portion 83B corrects the timing of the second reference signal PS2 based on the correction amount δ2 input from the correction amount calculation portion 92.

For example, the calibration mode is executed for a predetermined period when the image forming apparatus 10 is started. After the calibration mode is finished, the first reference signal output portion 83A and the second reference signal output portion 83B continue the timing correction based on the correction amounts δ1 and δ2 in the drawing mode. The calibration mode may be periodically executed during execution of the drawing mode.

As described above, the image forming apparatus 10 according to the present embodiment can suppress distortion of the image drawn on the projection surface 34 by correcting the timings of the first reference signal PS1 and the second reference signal PS2 based on the imaging information acquired by the imaging apparatus 72.

In each of the embodiments, while the MEMS mirror 32 of two axes is used as the light scanning device, a MEMS mirror of one axis may be used as the light scanning device. Accordingly, the disclosed technology can also be applied to an image forming apparatus comprising a light scanning device of one axis in which a movable mirror swings about a first axis.

In the third embodiment, for example, the following various processors can be used as a hardware structure of a processing unit that executes various processing of the image input portion 80, the information generation portion 81, the information storage portion 82, the first reference signal output portion 83A, the second reference signal output portion 83B, the light emission controller 84, the correction portion 85, and the table holding portion 86. The various processors include, in addition to a central processing unit (CPU) that is a general-purpose processor functioning as various processing units by executing software (program), a programmable logic device (PLD) such as the FPGA that is a processor having a circuit configuration changeable after manufacturing, a dedicated electric circuit such as an application specific integrated circuit (ASIC) that is a processor having a circuit configuration dedicatedly designed to execute specific processing, and the like.

One processing unit may be configured with one of the various processors or may be configured with a combination of two or more processors of the same type or different types (for example, a combination of a plurality of FPGAs and/or a combination of a CPU and an FPGA). In addition, a plurality of processing units may be configured with one processor.

Examples of the plurality of processing units configured with one processor include, first, as represented by a computer such as a client and a server, a form in which one processor is configured with a combination of one or more CPUs and software, and the processor functions as the plurality of processing units. Second, as represented by a system on chip (SoC) or the like, a form of using a processor that implements functions of the entire system including the plurality of processing units by one integrated circuit (IC) chip is included. In such a manner, various processing units are configured using one or more of the various processors as a hardware structure.

Furthermore, more specifically, an electric circuit (circuitry) in which circuit elements such as semiconductor elements are combined can be used as the hardware structure of the various processors.

### Explanation of References

10: image forming apparatus
20: control device
20B: memory
22: driver
24: light emitting device
25: laser driver
26: multiplexing optical system
27: laser light source
28: collimator
30: light scanning device
32: MEMS mirror
33: package
34: projection surface
35: sub strate
36: lid member
37: light transmission surface
38: light receiving region
39: light extraction region
40: mirror portion
40A: reflecting surface
41: first support portion
42: first movable frame
43: second support portion
44: second movable frame
45: connecting portion
46: fixed frame
50: piezoelectric element
51: first actuator
52: second actuator
60: support member
61: inclined surface
62: signal input terminal
63: bonding wire
70: optical element
72: imaging apparatus
73: signal output terminal
80: image input portion
81: information generation portion
82: information storage portion
83A: first reference signal output portion
83B: second reference signal output portion
84: light emission controller
85: correction portion
86: table holding portion
87: humidity and temperature sensor
90: Lissajous curve
92: correction amount calculation portion
93: signal correction portion
ΔX, ΔY: shift amount
δ1, δ2: correction amount
θ1: first deflection angle
θ2: second deflection angle
D1, D2: delay time period
DT: image data
IP: captured image
L: laser light
L1: first reference line
L1A, L1B: straight line
L2: second reference line
L2A, L2B: straight line
P: bright point
PS1: first reference signal
PS2: second reference signal
SI: intensity information
V1A, V1B: first driving signal
V2A, V2B: second driving signal
ZC1: first zero cross signal
ZC2: second zero cross signal
a₁: first axis
a₂: second axis

## Claims

1. A light scanning device (30) comprising:
a mirror device that includes a movable mirror (40) which swings about at least one axis; and
a package (33) that has at least two or more light transmission surfaces (37) not constituting the same plane and accommodates the mirror device (40), wherein the package (33) is configured with a substrate (35) having a flat plate shape and a lid member (36) having a box shape, wherein an imaging apparatus (72) and a signal output terminal (73) for extracting an imaging signal output from the imaging apparatus (72) to the outside are provided inside the package (33),
wherein out of the two or more light transmission surfaces (37) of the package (33), one light transmission surface is a light receiving surface for receiving an incidence ray on the movable mirror (40) from an outside, and the other light transmission surface is a light extraction surface for extracting light reflected by the movable mirror (40) to the outside,
wherein the light extraction surface guides a part of the light reflected by the movable mirror (40) to the imaging apparatus (72) by reflecting the part of the light, and
wherein the light receiving surface and the light extraction surface are configured with two light transmission surfaces (37) that are not parallel.

2. The light scanning device (30) according to claim 1,
wherein a vacuum or a negative pressure is created inside the package (33).

3. The light scanning device (30) according to claim 1 or 2,
wherein a signal input terminal (62) for receiving a driving signal for driving the movable mirror (40) from the outside is provided in the package (33).

4. The light scanning device (30) according to any one of claims 1 to 3,
wherein an optical element (70) that guides light incident from the light receiving surface to the movable mirror (40) by deflecting the light is provided inside the package (33).

5. An image forming apparatus (10) comprising:
a light scanning device (30) according to claim 1; and
a light emitting device (24) that emits light,
wherein the light emitted from the light emitting device (24) is incident on the movable mirror (40) through the light receiving surface.

## Patentansprüche

1. Lichtabtastvorrichtung (30), umfassend:
eine Spiegelvorrichtung, die einen beweglichen Spiegel (40), der um mindestens eine Achse schwingt, enthält; und
ein Paket (33), das mindestens zwei oder mehr Lichtdurchtrittsflächen (37), die nicht die gleiche Ebene bilden, aufweist und die Spiegelvorrichtung (40) aufnimmt, wobei das Paket (33) mit einem Substrat (35) in Form einer flachen Platte und einem Deckelelement (36) mit einer Kastenform konfiguriert ist, wobei eine Bildgebungsvorrichtung (72) und ein Signalausgangsanschluss (73) zum Extrahieren eines von der Bildgebungsvorrichtung (72) ausgegebenen Bildgebungssignals nach außen innerhalb des Pakets (33) vorgesehen sind,
wobei von den zwei oder mehr Lichtdurchtrittsflächen (37) des Pakets (33) eine Lichtdurchtrittsfläche eine Lichtempfangsfläche zum Empfangen eines Einfallsstrahls auf den beweglichen Spiegel (40) von einer Außenseite ist und die andere Lichtdurchtrittsfläche eine Lichtextraktionsfläche zum Extrahieren von Licht, das von dem beweglichen Spiegel (40) nach außen reflektiert wird, ist,
wobei die Lichtextraktionsfläche einen Teil des von dem beweglichen Spiegel (40) reflektierten Lichts zu der Bildgebungsvorrichtung (72) leitet, indem sie den Teil des Lichts reflektiert, und
wobei die Lichtempfangsfläche und die Lichtextraktionsfläche mit zwei Lichtdurchtrittsflächen (37) konfiguriert sind, die nicht parallel sind.

2. Lichtabtastvorrichtung (30) nach Anspruch 1,
wobei ein Vakuum oder ein Unterdruck innerhalb des Pakets (33) erzeugt wird.

3. Lichtabtastvorrichtung (30) nach Anspruch 1 oder 2,
wobei in dem Paket (33) ein Signaleingangsanschluss (62) zum Empfangen eines Antriebssignals zum Antreiben des beweglichen Spiegels (40) von außen vorgesehen ist.

4. Lichtabtastvorrichtung (30) nach einem der Ansprüche 1 bis 3,
wobei ein optisches Element (70), das von der Lichtempfangsfläche einfallendes Licht durch Ablenken des Lichts zu dem beweglichen Spiegel (40) leitet, innerhalb des Pakets (33) vorgesehen ist.

5. Bilderzeugungsvorrichtung (10), umfassend:
eine Lichtabtastvorrichtung (30) nach Anspruch 1; und
eine lichtemittierende Vorrichtung (24), die Licht emittiert,
wobei das von der lichtemittierenden Vorrichtung (24) emittierte Licht durch die Lichtempfangsfläche auf den beweglichen Spiegel (40) einfällt.

## Revendications

1. Dispositif de balayage de lumière (30) comprenant :
un dispositif de miroir qui inclut un miroir mobile (40) qui oscille autour d'au moins un axe ; et
un emballage (33) qui a au moins deux surfaces de transmission de lumière (37) ou plus ne constituant pas le même plan et accueille le dispositif de miroir (40), dans lequel l'emballage (33) est configuré avec un substrat (35) ayant une forme de plaque plate et un élément de couvercle (36) ayant une forme de boîte, dans lequel un appareil d'imagerie (72) et un terminal de sortie de signal (73) pour extraire un signal d'imagerie sorti d'imagerie de l'appareil d'imagerie (72) vers l'extérieur sont prévus à l'intérieur de l'emballage (33),
dans lequel parmi les deux surfaces de transmission de lumière (37) ou plus de l'emballage (33), une surface de transmission de lumière est une surface de réception de lumière pour recevoir un rayon d'incidence sur le miroir mobile (40) d'un extérieur, et l'autre surface de transmission de lumière est une surface d'extraction de lumière pour extraire de la lumière réfléchie par le miroir mobile (40) vers l'extérieur,
dans lequel la surface d'extraction de lumière guide une partie de la lumière réfléchie par le miroir mobile (40) vers l'appareil d'imagerie (72) en réfléchissant la partie de la lumière, et
dans lequel la surface de réception de lumière et la surface d'extraction de lumière sont configurées avec deux surfaces de transmission de lumière (37) qui ne sont pas parallèles.

2. Dispositif de balayage de lumière (30) selon la revendication 1,
dans lequel un vide ou une pression négative est créé à l'intérieur de l'emballage (33).

3. Dispositif de balayage de lumière (30) selon la revendication 1 ou la revendication 2,
dans lequel un terminal d'entrée de signal (62) pour recevoir un signal d'entraînement pour entraîner le miroir mobile (40) à partir de l'extérieur est prévu dans l'emballage (33).

4. Dispositif de balayage de lumière (30) selon l'une quelconque des revendications 1 à 3,
dans lequel un élément optique (70) qui guide de la lumière incidente à partir de la surface de réception de lumière vers le miroir mobile (40) en déviant la lumière est prévu à l'intérieur de l'emballage (33).

5. Appareil de formation d'images (10) comprenant :
un dispositif de balayage de lumière (30) selon la revendication 1 ; et
un dispositif d'émission de lumière (24) qui émet de la lumière,
dans lequel la lumière émise par le dispositif d'émission de lumière (24) est incidente sur le miroir mobile (40) à travers la surface de réception de lumière.
